# EUROPÄISCHE PATENTANMELDUNG

(11) **EP 4 631 653 A1**
(43) Veröffentlichungstag der Anmeldung: **15.10.2025**
(21) Anmeldenummer: 25162609.9
(22) Anmeldetag: 10.03.2025
(51) Int. Cl.: B23B 31/20

(54) **STÖSSELSPANNSYSTEM**

(30) Priorität: 12.04.2024 DE 102024110353
(71) Anmelder: Adelbert Haas GmbH, 78647 Trossingen (DE)
(72) Erfinder: Zepf, Timo, 78606 Seitingen-Oberflacht (DE)
(74) Vertreter: Westphal, Mussgnug & Partner Patentanwälte mbB

(57) **Zusammenfassung**

Bereitgestellt wird ein Stößelspannsystem (100) mit einem rotationssymmetrischen Grundkörper (110), der eine den rotationssymmetrischen Grundkörper (110) längs seiner Symmetrieachse durchsetzenden Öffnung, in der eine Zugstange (140) verläuft aufweist, mit einer mittels der Zugstange (140) spannbaren Spannzange (120) zur Fixierung eines zum Stößelspannsystem (100) gehörenden Stößels (190) und mit einem auswechselbaren Halter (180), dessen Innenraum (181) der Stößel (190) vor dem Eintritt in die Spannzange (120) durchquert, bei dem zumindest ein Abschnitt der Spannzange (120) die Stirnseite des Grundkörpers (110), an der der auswechselbare Halter (180) angeordnet ist, in Verlaufsrichtung der Zugstange (140) überragt und in den Innenraum (181) des auswechselbaren Halters (180) eintritt.

## Beschreibung

Werkzeugmaschinen werden in immer weitergehendem Maße automatisiert betrieben. Dies bringt insbesondere mit sich, dass auch der Werkzeugwechsel beim Betrieb einer solchen Werkzeugmaschine teil- oder vollautomatisiert durchgeführt wird. Dabei ist es gängige Praxis, die verschiedenen Werkzeuge über eine Werkzeugaufnahme mit einer Spindel, einer Rotationsachse oder einem sonstigen Teilapparat der Werkzeugmaschine zu verbinden.

Es gibt auch Fälle, bei denen das zu bearbeitende Werkstück mit der Spindel, der Rotationsachse oder dem sonstigen Teilapparat der Werkzeugmaschine gekoppelt wird. Um dies zu verdeutlichen, wird im Folgenden der Begriff "Werkzeug- oder Werkstückaufnahme" verwendet, obwohl eigentlich jede Werkzeugaufnahme grundsätzlich auch eine Werkstückaufnahme ist bzw. zu einer Werkstückaufnahme wird, wenn das Spannmittel, in das bestimmungsgemäß bei einer Werkzeugaufnahme das Werkzeug aufgenommen wird, zum Halten eines Werkstücks verwendet wird.

Bekannt ist es, Werkzeuge oder Werkstücke, welche ein axiales Loch aufweisen, mittels eines Spannstößels, welcher insbesondere einen langgestreckten zylindrischen Schaft mit einem Kragen, welcher insbesondere eine radiale Verdickung bildet, an einem Ende aufweist, in der Werkzeug- oder Werkstückaufnahme zu befestigen. Dazu wird der Spannstößel durch das Loch geführt und der zylindrische Schaft des Spannstößels in einem üblicherweise im Inneren eines Grundkörpers des Stößelspannsystems angeordnetes Spannfutter gefasst und in axialer Richtung derart weit eingezogen, dass das Werkzeug oder Werkstück an einer Anlagefläche eines -in vielen Fällen werkzeug- oder werkstückspezifischen und deswegen üblicherweise auswechselbar an der Stirnseite des Stößelspannsystems angeordneten- Halters anliegt und zwischen der Anlagefläche und dem Kragen des Spannstößels gespannt gehalten ist.

Ein Problem bekannter Stößelspannsysteme ist, dass ihr Haltemoment der wegen der beträchtlichen Länge des Stößels hohen Torsion des Stößels leidet. Die Aufgabe der Erfindung besteht daher darin, ein Stößelspannsystem mit einem verbesserten Haltemoment bereitzustellen. Diese Aufgabe wird gelöst durch ein Stößelspannsystem mit den Merkmalen des Patentanspruchs **1.** Vorteilhafte Ausgestaltungen der Erfindung sind Gegenstand der abhängigen Ansprüche.

Das erfindungsgemäße Stößelspannsystem weist einen rotationssymmetrischen Grundkörper mit einer den rotationssymmetrischen Grundkörper längs seiner Symmetrieachse durchsetzenden Öffnung, in der eine Zugstange verläuft, auf. Darüber hinaus weist es eine mittels der Zugstange spannbaren Spannzange zur Fixierung eines zum Stößelspannsystem gehörenden Stößels und einen auswechselbaren Halter, dessen Innenraum der Stößel vor dem Eintritt in die Spannzange durchquert, auf. Anzumerken ist dabei, dass sowohl Halter als auch Stößel gegebenenfalls auf die jeweilige Werkstückgeometrie abgestimmt sind und deshalb Wechselteile darstellen. Zu einem Stößelspannsystem können also auch mehrere Halter und/oder mehrere Stößel gehören, von denen zum Betrieb aber immer nur jeweils ein Halter und ein Stößel eingesetzt werden.

Erfindungswesentlich ist, dass zumindest ein Abschnitt der Spannzange die Stirnseite des Grundkörpers, an der der auswechselbare Halter angeordnet ist, in Verlaufsrichtung der Zugstange überragt und in den Innenraum des auswechselbaren Halters eintritt. Auf diese Weise wird es möglich, deutlich kürzere Stößel als bislang üblich einzusetzen, deren Torsion wegen ihrer geringeren Länge geringer ausfällt, so dass es möglich wird, mit höheren Haltemomenten zu arbeiten.

In einer besonders bevorzugten Ausführungsform der Erfindung weisen die Spannschenkel der Spannzange eine in axialer Richtung hinter den Spannbacken liegende Ausnehmung auf, in die ein Ausstoßer für den Stößel aufgenommen ist. Dieser Ausstoßer kann als ein im vorderen Bereich der Zugstange vorhandener Dorn ausgebildet sein und erlaubt es, Stößel mit während der Bearbeitung mit dem Werkzeug oder während der Bearbeitung des Werkstücks im Werkzeug oder Werkstück versenktem Kopf beim Lösen der Spannzange zum Wechsel des Werkzeugs oder Werkstücks aus der Versenkung herauszuschieben, so dass sie leichter von einem Bediener oder einem Roboter gegriffen werden können.

Während grundsätzlich eine Wechselwirkung der Spannbacken der Spannzange mit den Wandflächen der den Grundkörper durchsetzenden Öffnung beim Hineinziehen der Spannbacken in die Öffnung genutzt werden kann, so dass diese die Spannzangenaufnahem , um die gewünschte Klemmwirkung der Spannbacken auf den Stößel hervorzurufen, weist in einer bevorzugten Ausführungsform der Erfindung das Stößelspannsystem eine Spannzangenaufnahme auf, die die Stirnseite des Grundkörpers, an der der auswechselbare Halter angeordnet ist, in Verlaufsrichtung der Zugstange überragt und in den Innenraum des auswechselbaren Halters eintritt. Werden sich in Zugrichtung verjüngende Spannbacken der Spannzange in die Spannzangenaufnahme hineingezogen, ergibt sich eine für die erzielbare Positioniergenauigkeit vorteilhafte Klemmwirkung der Innenseiten der Spannbacken nach innen mit dem Stößel und eine Klemmwirkung der Außenseiten der Spannbacken mit der Spannzangenaufnahme.

Besonders vorteilhaft für die Erzielung dieses Effekts ist, es, wenn die Wände der Spannzangenaufnahme Schlitze oder nutförmige Schwächungen aufweisen.

Besonders vorteilhaft wirkt es sich auf die erreichbare Positioniergenauigkeit aus, wenn die Spannzangenaufnahme innerhalb des Grundkörpers in axialer Richtung durch eine Spiralfeder gespannt wird und in Richtung der Spreizung durch eine Tellerfeder gespannt wird.

Besonders leicht lässt sich das Stößelspannsystem mittels einer Werkzeugmaschine betreiben, wenn die Zugstange an ihrem der Spannzange gegenüberliegenden Ende einen Anzugbolzen oder einen Zugstangenadapter zur Verbindung mit einem Spindelspannsystem einer Werkzeugmaschine aufweist.

In einer bevorzugten Ausführungsform der Erfindung ist zudem dass die Spannzange derart lösbar mit der Zugstange verbunden und am Grundkörper angeordnet, dass die Spannzange nach dem Lösen der Verbindung zur Zugstange in der zur Einführrichtung des Stößels in die Spannzange entgegengesetzten Richtung vom Grundkörper entfernbar ist. Auf diese Weise wird es ermöglicht, die Spanzange einfach auszutauschen, wenn sie abgenutzt ist oder einen Defekt aufweist sowie Spannzangen mit unterschiedlichen Durchmessern einzusetzen, so dass man zum Beispiel für Werkstücke mit größerer Bohrung wo hohe Bearbeitungskräfte wirken den Stößelspann-/Zugdurchmesser vergrößern, dadurch mit höherer Kraft ziehen und das Werkstück stärker spannen kann.

Dies kann beispielsweise sehr einfach dadurch realisiert werden, dass die Spannzange über eine Schraubverbindung mit der Zugstange verbunden ist. Eine dazu alternative Möglichkeit besteht darin, dass die Spannzange über eine Bajonettverbindung mit der Zugstange verbunden ist.

Um das Einführen und Herausziehen der Spannzange zu erleichtern ist es hilfreich, wenn die Spannbacken der Spannzange auf ihrer von der Zugstange weg weisenden Stirnseite Öffnungen zur Aufnahme eines Werkzeugs zum Lösen der Verbindung zwischen Spannzange und Zugstange und/oder zum Herausziehen der Spannzange aus dem Grundkörper aufweisen. Ein solches Werkzeug kann auch als separates Teil zum Stößelspannsystem dazugehören.

Die Erfindung wird nachfolgend anhand von Figuren, die Ausführungsbeispiele zeigen, näher erläutert. Es zeigt:
- Fig. 1:: eine isometrische Darstellung eines Stößelspannsystems mit eingespanntem Werkstück;
- Fig. 2:: eine isometrische Darstellung des Stößelspannsystems aus Figur 1 mit entferntem Stößel und Halter;
- Fig. 3:: eine Schnittansicht des Stößelspannsystems mit eingespanntem Werkstück aus Figur 1; und
- Fig. 4:: eine Schnittansicht des Stößelspannsystems mit entferntem Stößel und Halter aus Figur 2.

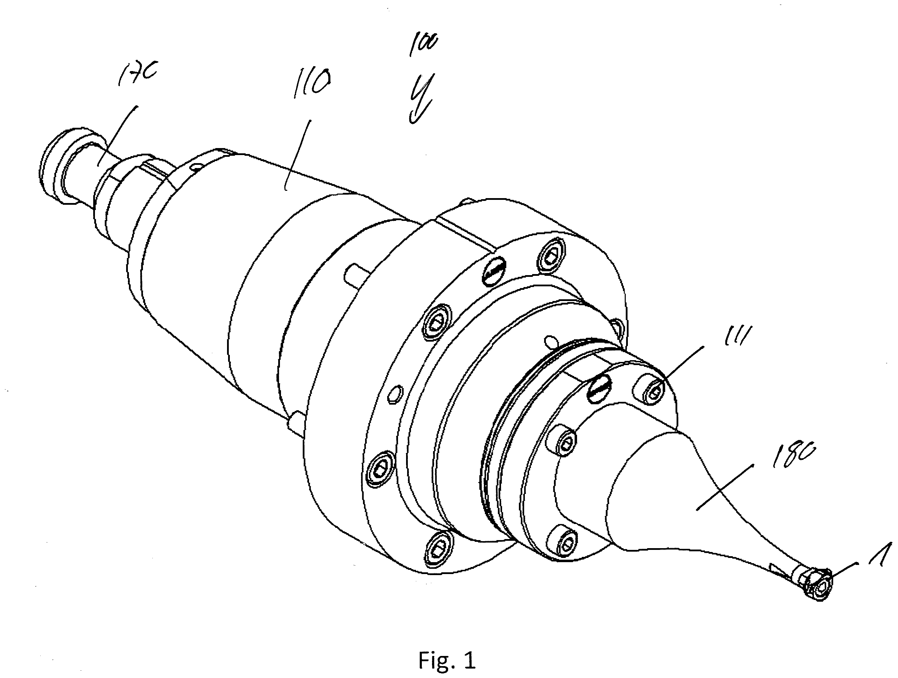

Figur 1 zeigt eine isometrische Darstellung eines Stößelspannsystems 100 mit eingespanntem Werkstück 1. Man erkennt den Grundkörper 110 des Stößelspannsystems, an dessen dem Betrachter zugewandter Stirnseite -im vorliegenden Beispiel mit vier Schrauben 111, aber auch andere Alternativen wie z.B. ein Schnellwechselsystem sind möglich- ein werkstückspezifischer Halter 180 angeordnet ist. Am dem Betrachter zugewandten Ende des Halters ist eine in Figur 1 durch das daran anliegende Werkstück 1 verdeckte Anlagefläche für das Werkstück 1 angeordnet, das durch einen Stößel 190, der eine Öffnung im Werkstück 1 so durchsetzt, dass sein Stößelkopf 191 im Werkstück 1 versenkt ist, das Werkstück 1 an der durch die dem Werkstück 1 zugewandte Stirnfläche des Halters 180 gebildete Anlagefläche des Halters 180 fixiert wird.

Am vom Betrachter abgewandten Ende des Grundkörpers ist ein Anzugbolzen oder Zugstangenadapter 170 zu erkennen, über den die Betätigung des Stößelspannsystems 100 durch eine Werkzeugmaschine, an der es installiert ist, erfolgt. Die Funktion des Stößelspannsystems 100 bei einer solchen Betätigung wird weiter unten detailliert erläutert

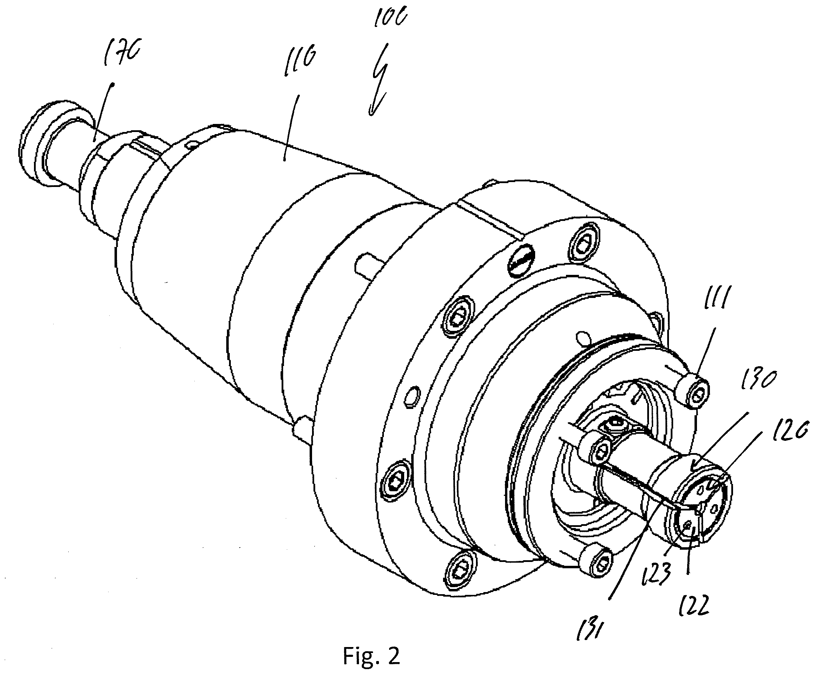

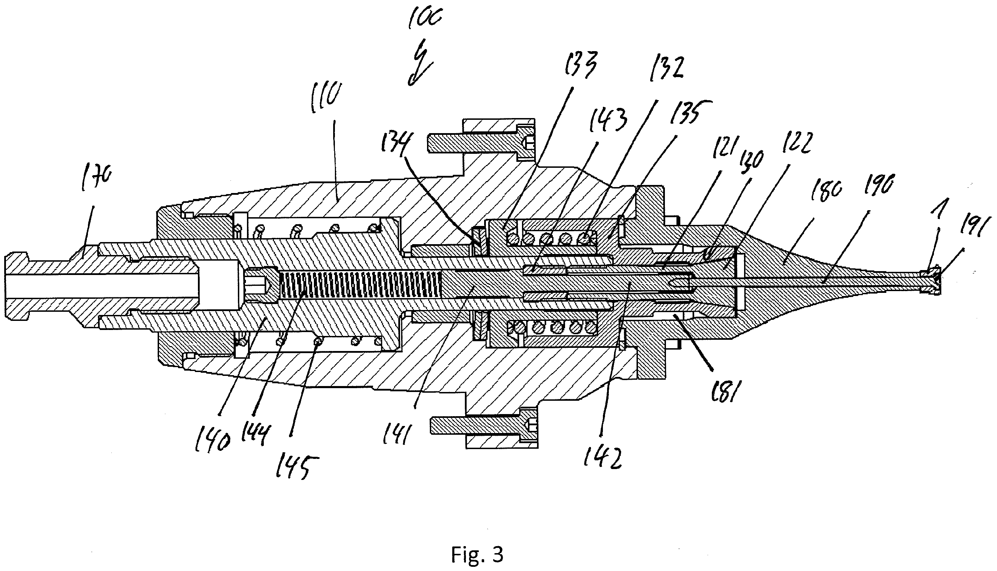

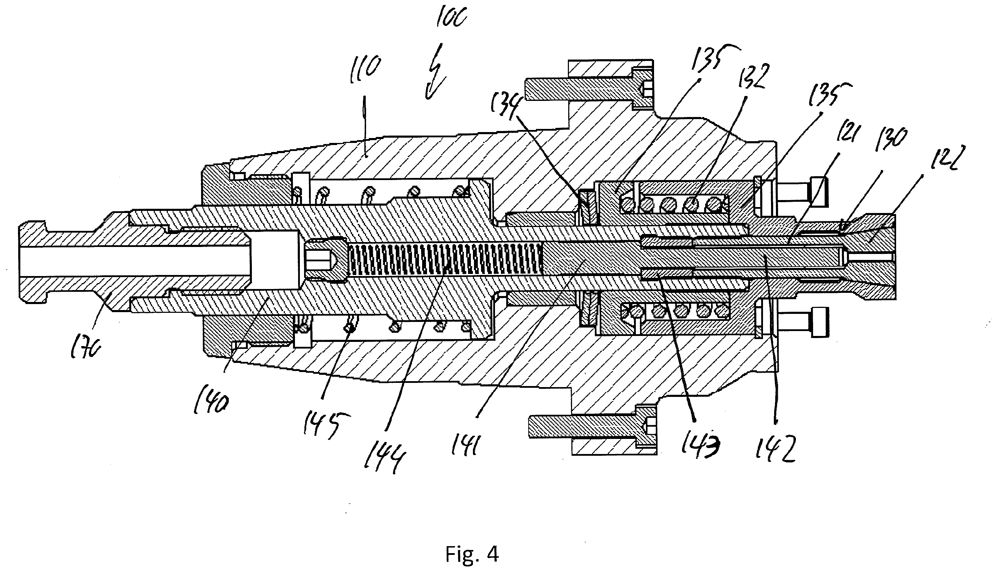

In der Darstellung gemäß Figur 2 ist das Stößelspannsystem 100 mit entferntem Halter 180 abgebildet, so dass die über die-Stirnseite des Grundkörpers 110 hinausragende Spannzange 120 und deren ebenfalls über die Stirnseite des Grundkörpers 110 hinausragende Spannzangenaufnahme 130 sichtbar ist, die in diesem Ausführungsbeispiel Schlitze 131 aufweist. Dementsprechend sind die Spannzange 120 und die Spannzangenaufnahme 130 bei installiertem Halter 180 zumindest teilweise im in Figur 4 sichtbaren Innenraum 181 des Halters 180 aufgenommen; sie weisen zumindest im gezeigten Ausführungsbeispiel aber jeweils auch Abschnitte auf, die im Grundkörper 110 angeordnet sind, wie die Figuren 3 und 4 zeigen.

In Figur 2 ist darüber hinaus gut zu erkennen, dass die am dem Werkstück 1 zugewandten Ende der Spannschenkel 121 der Spannzange 120 angeordneten Spannbacken 122 auf ihrer von der in der Darstellung der Figur 2 vom Grundkörper 110 verdeckten, aber in den Figuren 3 und 4 sichtbaren Zugstange 140 weg weisenden Stirnseite Öffnungen 123 zur Aufnahme eines Werkzeugs zum Lösen der Verbindung zwischen Spannzange 120 und Zugstange 140 und/oder zum Herausziehen bzw. Einschieben der Spannzange 120 aus dem Grundkörper 110 aufweisen.

Weitere Details zu Aufbau des Stößelspannsystems 100 sowie zu seiner Funktionsweise lassen sich den Schnittdarstellungen gemäß den Figuren 3 und 4 entnehmen. Man erkennt in dieser Darstellung die in die Öffnung 112, die den Grundkörper 110 längs seiner Symmetrieachse, die mit der Mittelachse des rotationssymmetrischen Grundkörpers 110, um die herum bei Verwendung des Stößelspannsystems 100 die Rotation erfolgt, zusammenfällt, durchsetzt.

Im Inneren der Öffnung 112 ist eine Zugstange 140 angeordnet, die an ihrem der Spannzange 120 gegenüberliegenden Ende mit dem Anzugbolzen oder Zugstangenadapter 170, über den die Betätigung des Stößelspannsystems 100 durch eine Werkzeugmaschine, an der es installiert ist, erfolgt, verbunden ist. Ausgehend vom anderen Ende der Zugstange 140 führt eine konzentrische Bohrung in das Innere der Zugstange 140, deren Ende auf der dem Werkstück 1 zugewandten Seite ein Mittel zur lösbaren Verbindung mit der Spannzange 120 aufweist. Im gezeigten Beispiel ist dies ein Innengewinde, in das die Spannzange 120 mit einem am den Spannbacken 122 gegenüberliegenden Ende der Spannschenkel 121 angeordneten Außengewinde eingeschraubt ist.

Im Inneren dieser Bohrung ist zudem ein Ausstoßer 141 mit einem Fortsatz 142 axial verschiebbar angeordnet, wobei allerdings die Verschiebung in Richtung auf das Werkstück 1 hin durch einen mit der Zugstange 140 fest verbundenen Anschlag 143 begrenzt ist. Der Fortsatz 142 greift dabei in Ausnehmungen ein, die in den Spannschenkeln 121 der Spannzange 120 in axialer Richtung hinter den Spannbacken 122 liegend vorgesehen sind. Der Ausstoßer 141 wird an seinem dem Werkstück 1 gegenüberliegenden Boden durch eine Feder 144 abgestützt.

Wie man in Figur 3 besonders gut erkennt, ist ein Abschnitt der Spannschenkel 121 innerhalb des Grundkörpers 110 des Stößelspannsystems 100 aufgenommen, während ein anderer Abschnitt der Spannschenkel 121 (und somit der Spannzange 120) einschließlich der Spannbacken 122 die dem Werkstück 1 zugewandte Stirnfläche des Grundkörpers 110 überragt und, wie Figur 4 zeigt, in den Innenraum 181 des Halters 180 aufgenommen ist.

Ebenfalls in den Innenraum 181 des Halter 180 hinein ragt die Spannzangenaufnahme 130, deren innerhalb des Grundkörpers 110 verlaufender Abschnitt 135 mittels einer Spiralfeder 132 auf einem Bodenstück 133 abgestützt ist, das seinerseits auf einer Tellerfeder 134 gelagert ist, wodurch bewirkt wird, dass die Spannzangenaufnahme 130 innerhalb des Grundkörpers 110 in axialer Richtung durch die Spiralfeder 132 gespannt wird und in Richtung der Spreizung bei Betätigung der Zugstange 140 durch die Tellerfeder 134 gespannt wird.

Um ein Werkstück 1 oder Werkzeug mit dem Stößelspannsystem 100 zu spannen wird es auf den Stößel 190 aufgefädelt, dessen Stößelkopf 191 einen Formschluss mit dem Werkstück oder Werkzeug herstellen kann und das dem Stößelkopf 191 gegenüber liegende Ende des Stößels 190 wird zwischen die Spannbacken 122 der Spannzange 120 eingeführt, so dass das Werksrück 1 an der durch die ihm zugewandte Stirnseite des Halters 180 gebildeten Anlagefläche zur Anlage kommt.

Durch einen Zug am Anschlussbolzen oder Zugstangenadapters 170 wird anschließend die Zugstange 140 gegen den Widerstand der Druckfeder 145 zurückgezogen, was zugleich dazu führt, dass die Spannschenkel 121 der Spannzange 120 zurückgezogen werden. Dies führt zu einer Klemmwirkung der Spannzange 120 auf den Stößel 190 wegen der Wechselwirkung der Spannbacken 122, deren Außendurchmesser in Richtung auf das Werkstück 1 hin zunimmt, mit dem entgegen dieser Richtung abnehmenden Innendurchmesser der Spannzangenaufnahme 130. Dementsprechend wird der Stößel 190 gegriffen und in Richtung auf das Ende des Grundkörpers 110 hin gezogen, wodurch der Ausstoßer 142 entgegen der Kraft der Feder 144 zurückgeschoben wird und das Werkstück 1 an die Anlagefläche gezogen wird. Dabei bleibt insbesondere wegen der Schlitze 131 oder Schwächungen der Spannzangenaufnahme 130 und deren Lagerung bzw. Spannung durch die Spiralfeder 132 und die Tellerfeder 134 eine hohe Positioniergenauigkeit erhalten. Wird der Zug auf die Zugstange 140 nicht mehr aufrecht erhalten, drückt die Druckfeder 145 die Zugstange 140 wieder nach vorne. Dementsprechend rutscht die Spannzange 120 in der Spannzangenaufnahme 130 nach vorne, der Stößel 190 wird nicht länger durch die Spannbacken 122 festgeklemmt und die Feder 144 kann sich entspannen, wodurch der Stößel 190 ausgestoßen wird und nun leicht zu fassen ist.

### Bezugszeichenliste

- 1: Werkstück
- 100: Stößelspannsystem
- 110: Grundkörper
- 111: Schraube
- 120: Spannzange
- 121: Spannschenkel
- 122: Spannbacke
- 123: Öffnung
- 130: Spannzangenaufnahme
- 131: Schlitz
- 132: Spiralfeder
- 133: Bodenstück
- 134: Tellerfeder
- 135: Abschnitt
- 140: Zugstange
- 141: Ausstoßer
- 142: Fortsatz
- 143: Anschlag
- 144: Feder
- 145: Druckfeder
- 170: Anzugbolzen oder Zugstangenadapter
- 180: Halter
- 181: Innenraum
- 190: Stößel
- 191: Stößelkopf

## Patentansprüche

1. Stößelspannsystem (100) mit einem rotationssymmetrischen Grundkörper (110), der eine den rotationssymmetrischen Grundkörper (110) längs seiner Symmetrieachse durchsetzenden Öffnung, in der eine Zugstange (140) verläuft aufweist, mit einer mittels der Zugstange (140) spannbaren Spannzange (120) zur Fixierung eines zum Stößelspannsystem (100) gehörenden Stößels (190) und mit einem auswechselbaren Halter (180), dessen Innenraum (181) der Stößel (190) vor dem Eintritt in die Spannzange (120) durchquert,
**dadurch gekennzeichnet,**
**dass** zumindest ein Abschnitt der Spannzange (120) die Stirnseite des Grundkörpers (110), an der der auswechselbare Halter (180) angeordnet ist, in Verlaufsrichtung der Zugstange (140) überragt und in den Innenraum (181) des auswechselbaren Halters (180) eintritt.

2. Stößelspannsystem (100) nach Anspruch 1,
**dadurch gekennzeichnet, dass** die Spannschenkel (121) der Spannzange (120) eine in axialer Richtung hinter den Spannbacken (122) liegende Ausnehmung aufweisen, in die ein Ausstoßer (141) für den Stößel (190) aufgenommen ist.

3. Stößelspannsystem (100) nach einem der Ansprüche 1 oder 2, **dadurch gekennzeichnet, dass** das Stößelspannsystem (100) eine Spannzangenaufnahme (130) aufweist, die die Stirnseite des Grundkörpers (110), an der der auswechselbare Halter (180) angeordnet ist, in Verlaufsrichtung der Zugstange (140) überragt und in den Innenraum (181) des auswechselbaren Halters (180) eintritt.

4. Stößelspannsystem (100) nach Anspruch 3,
**dadurch gekennzeichnet, dass** die Wände der Spannzangenaufnahme (130) Schlitze (130) oder nutförmige Schwächungen aufweisen.

5. Stößelspannsystem (100) nach einem der Ansprüche 3 oder 4,
**dadurch gekennzeichnet, dass** die Spannzangenaufnahme (130) innerhalb des Grundkörpers (110) in axialer Richtung durch eine Spiralfeder (132) gespannt wird und in Richtung der Spreizung durch eine Tellerfeder (134) gespannt wird.

6. Stößelspannsystem (100) nach einem der Ansprüche 1 bis 5, **dadurch gekennzeichnet, dass** die Zugstange (140) an ihrem der Spannzange (120) gegenüberliegenden Ende einen Anzugbolzen oder Zugstangenadapter (170) zur Verbindung mit einem Spindelspannsystem einer Werkzeugmaschine aufweist.

7. Stößelspannsystem (100) nach einem der Ansprüche 1 bis 6, **dadurch gekennzeichnet,**
**dass** die Spannzange (120) derart lösbar mit der Zugstange (140) verbunden und am Grundkörper (110) angeordnet ist, dass die Spannzange (120) nach dem Lösen der Verbindung zur Zugstange (140) in der zur Einführrichtung des Stößels (190) in die Spannzange (120) entgegengesetzten Richtung vom Grundkörper (110) entfernbar ist.

8. Stößelspannsystem (100) nach Anspruch 7,
**dadurch gekennzeichnet, dass** die Spannzange (120) über eine Schraubverbindung mit der Zugstange (140) verbunden ist.

9. Stößelspannsystem (100) nach Anspruch 7,
**dadurch gekennzeichnet, dass** die Spannzange (120) über eine Bajonettverbindung mit der Zugstange (140) verbunden ist.

10. Stößelspannsystem (100) nach einem der Ansprüche 7 bis 9, **dadurch gekennzeichnet, dass** die Spannbacken (122) der Spannzange (120) auf ihrer von der Zugstange (140) weg weisenden Stirnseite Öffnungen (123) zur Aufnahme eines Werkzeugs zum Lösen der Verbindung zwischen Spannzange (120) und Zugstange (140) und/oder zum Herausziehen der Spannzange (120) aus dem Grundkörper (110) aufweisen.
